Europäisches Patentamt

European Patent Office

Office européen des brevets

(19)

(11) Veröffentlichungsnummer: **0 182 139 B1**

(12) **EUROPÄISCHE PATENTSCHRIFT**

(45) Veröffentlichungstag der Patentschrift: **17.07.91**

(51) Int. Cl.5: **B65D 81/26**, B65D 1/34

(21) Anmeldenummer: **85113444.5**

(22) Anmeldetag: **23.10.85**

(54) **Schale zur Aufnahme von Nahrungsmitteln, sowie Verfahren und Vorrichtung zu deren Herstellung.**

(30) Priorität: **20.11.84 DE 3442341**

(43) Veröffentlichungstag der Anmeldung:
**28.05.86 Patentblatt 86/22**

(45) Bekanntmachung des Hinweises auf die
Patenterteilung:
**17.07.91 Patentblatt 91/29**

(84) Benannte Vertragsstaaten:
**AT BE CH DE FR GB IT LI LU NL SE**

(56) Entgegenhaltungen:
**DE-B- 2 107 957**
**GB-A- 924 689**
**GB-A- 1 168 925**
**US-A- 3 288 346**

(73) Patentinhaber: **Lin Tec Verpackungstechnik
GmbH
Deltastrasse
W-2863 Ritterhude(DE)**

(72) Erfinder: **Gröne, Horst Ditmar
Klint 2
W-2822 Schwanewede 2 Neuenkirchen(DE)**

(74) Vertreter: **Bolte, Erich, Dipl.-Ing. et al
Hollerallee 73
W-2800 Bremen 1(DE)**

**Beschreibung**

Die Erfindung bezieht sich auf eine Schale zur Aufnahme von Flüssigkeit absondernden Nahrungs- und Genußmitteln, beispielsweise Fleisch, Fisch oder Geflügel, gemäß dem Oberbegriff des Anspruchs 1. Des weiteren bezieht sich die Erfindung auf ein Verfahren zur Herstellung einer derartigen Schale gemäß dem Oberbegriff des Anspruchs 4 und eine entsprechende Vorrichtung gemäß dem Oberbegriff des Anspruchs 7.

Generell besteht beim Verpacken von Flüssigkeiten absondernden Nahrungsmitteln, insbesondere Fleisch, das Problem, daß die Verpackungen einerseits möglichst luft- und flüssigkeitsdicht sein sollen, und andererseits die beim Transport sowie Lagerung aus dem Nahrungsmittel austretenden Flüssigkeiten, beispielsweise Blut, Fleischsaft etc., nicht frei im Inneren der Verpackung fließen sollen, da dieses vom Verbraucher als unästhetisch angesehen wird und beim Auspacken oder auch nach einer Beschädigung der Packung bei der Lagerung und dem Transport zum Auslaufen der Flüssigkeit und damit zu Verschmutzungen führt.

Aus der GB-A-1 168 925 geht eine gattungsbildende Schale hervor, die über äußere Lagen und eine mittlere saugfähige Einlage verfügt. Die zum Inneren der Schale weisende Lage ist mit Öffnungen versehen, durch die sich in der Schale sammelnde Flüssigkeiten zur saugfähigen Einlage gelangen und von dieser aufgesogen werden können. Die Ausbildung dieser bekannten Schale läßt eine aufwendige Herstellung erwarten.

Aus der DE-B-2 107 957 geht ein Verfahren zur Herstellung einer Schale aus zwei äußeren Lagen und einer mittleren saugfähigen Einlage sowie Öffnungen in der (inneren) Lage hervor. Dieses Verfahren bezieht sich auf die Verbindung der äußeren Lagen bei dazwischen angeordneter gleich großer Einlage. Der DE-B-2 107 957 kann demgegenüber nicht entnommen werden, wie die Öffnungen in der inneren Einlage hergestellt werden.

Hiervon ausgehend, liegt der Erfindung die Aufgabe zugrunde, eine in wirksamer Weise Flüssigkeiten oder dergleichen aufnehmende Schale sowie ein einfaches und leistungsfähiges Verfahren und eine Vorrichtung zur Herstellung einer solchen Schale zu schaffen.

Diese Aufgabe wird durch die in den Ansprüchen 1,4 bzw. 7 angegebenen Merkmale gelöst. Durch die Bildung der Schale aus gleich langen Bahnabschnitten sowohl für die Lagen als auch die Einlage und den in einer Richtung der Schale durchgehenden Verlauf der Öffnungen werden die Voraussetzungen für eine einfache, insbesondere kontinuierliche, Herstellung der Schale geschaffen. Des weiteren hat sich gezeigt, daß durch die Öffnungen in den Querseitenrändern der Schale eine Flüssigkeit noch dann von der saugfesten Einlage wirksam aufgenommen werden kann, wenn die Schale schräg liegt.

Bei einer bevorzugten Weiterbildung der Schale sind die die Öffnungen umgebenden Bereiche in der oberen Lage trichterförmig ausgebildet. Hierdurch fließt die Flüssigkeit in der Schale besser zur saugfähigen Einlage ab. Die Dränagewirkung wird also verbessert.

Dadurch, daß nach dem Verfahren zur Herstellung der Shale vor dem Zusammenführen der Bahnen zur Bildung der äußeren Lagen und der Einlage die Bahn der oberen Lage mit den Öffnungen versehen wird, lassen sich die Öffnungen kontinuierlich durch einfaches Stanzen herstellen, wobei ausgeschlossen ist, daß beim Stanzen die saugfähige Einlage oder sogar die untere Lage beschädigt wird.

Im folgenden wird ein Ausführungsbeispiel der Erfindung anhand der Zeichnung näher erläutert. In dieser zeigen:

Fig. 1      eine Draufsicht auf eine Schale;

Fig. 2      einen vergrößert dargestellten Längsschnitt II - II durch die Schale im Bereich mehrerer Öffnungen;

Fig. 3      einen vergrößert dargestellten Querschnitt III - III durch die Schale im Bereich einer Öffnung;

Fig. 4      einen nochmals vergrößerten Ausschnitt IV aus der Darstellung gemäß Fig. 3;

Fig. 5      eine schematische Ansicht einer Vorrichtung zur Herstellung der Schale;

Fig. 6      eine Ansicht eines Walzenspalts einer Verbindungsstation der Fig. 5; und

Fig. 7      eine Ansicht ähnlich wie der Fig. 6, jedoch mit mehreren, nebeneinanderliegenden saugfähigen Einlagen.

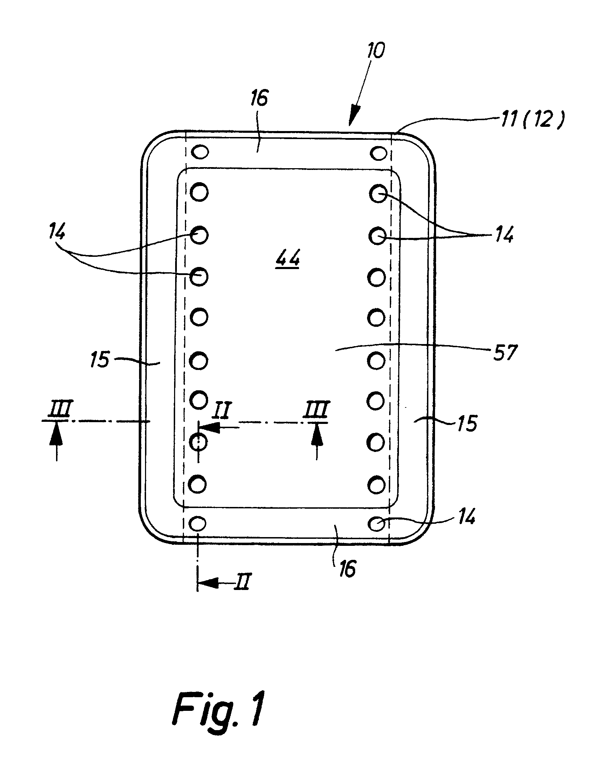

Die Fig. 1 bis 4 zeigen eine rechteckige Schale 10. Diese besteht aus drei Schichten, nämlich einer oberen Lage 11, einer unteren Lage 12 und einer dazwischenliegenden, saugfähigen Einlage 13. Die beiden Lagen 11 und 12 sind vorzugsweise aus geschäumten Kunststoff, beispielsweise Polystyrol. Die saugfähige Einlage 13 besteht insbesondere aus Papier, wie beispielsweise saugfähigem Vlies-Material. An seitlichen Bereichen der Schale 10 sind nach oben abstehende Ränder gebildet, nämlich in Längsrichtung der Schale 10 verlaufende Seitenränder 15 und in Querrichtung verlaufende Querseitenränder 16.

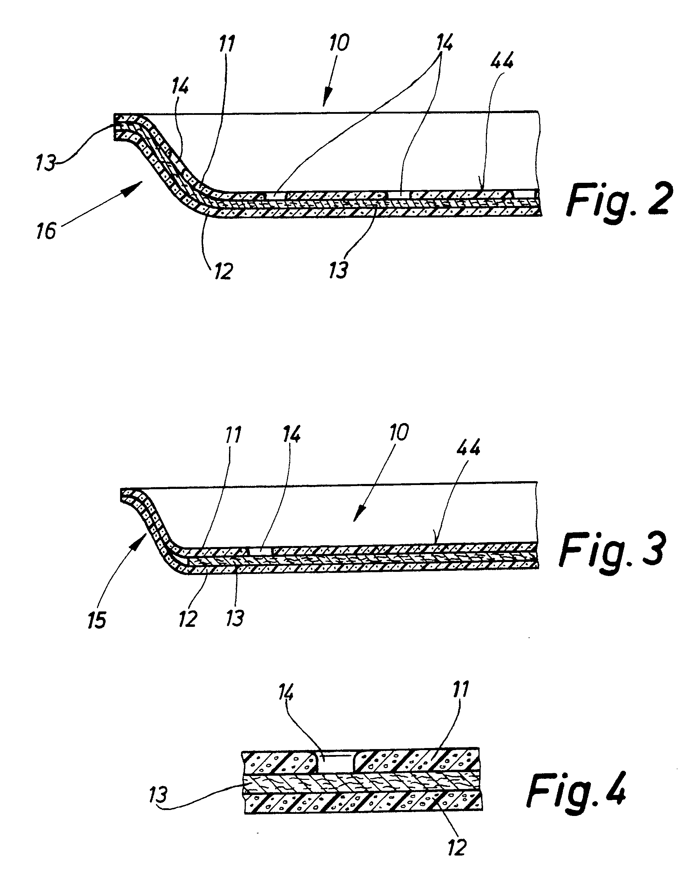

Die Schale 10 hat die obere Lage 11 eine Mehrzahl von Öffnungen 14, die bis zur saugfähigen Einlage 13 hindurchgehen. Diese Öffnungen 14 sind im vorliegenden Ausführungsbeispiel gleichmäßig auf die obere Lage 11 verteilt, und zwar in zwei parallelen Reihen, die in seitlichen Bereichen längs der Schale 10 verlaufen. Jede Reihe weist in etwa gleichem Abstand hintereinander liegende Öffnungen 14 auf, wobei die Reihen nicht nur in einer Bodenwand 44 der Schale 10 Öffnungen 14 aufweisen, sondern auch in den Querseitenrändern 16. Wie insbesondere aus der Fig. 4 ersichtlich, sind die Öffnungen 14 als durchgehende, zylindrische Löcher ausgebildet. Zur Innenseite der Schale 10 hin sind die Öffnungen 14 trichterförmig ausgebildet. Zu diesem Zweck sind die oberen Ränder der Öffnungen 14 durch einen umlaufenden Radius abgerundet, der von der zur Innenseite der Schale 10 gerichteten Oberfläche der oberen Lage 11 ausgeht und in den Öffnungen 14 mündet. Die Fig. 1 und 2 zeigen darüber hinaus, daß die im Bereich der Querseitenränder 16 verlaufenden Öffnungen 14 leicht oval sind durch das Aufrichten der Querseitenwände 16 beim Tiefziehen der Schale 10.

Die Fig. 1 und 3 lassen erkennen, daß sich die saugfähige Einlage 13 in Richtung quer zur Schale 10 nur über die Bodenwand 44 derselben erstreckt. Dadurch bestehen die nach oben abstehenden Seitenränder nur aus zwei Schichten, nämlich den Lagen 11 und 12, die dort direkt aufeinanderliegen und miteinander verbunden sind, beispielsweise durch Verkleben, Heißsiegeln und/oder Verschweißen. Die Breite der streifenförmigen Einlage 13 kann gegenüber der Darstellung in Fig. 3 verringert werden, und zwar maximal soweit, daß die Einlage 13 sämtliche Öffnungen 14 abdeckt.

Hinsichtlich ihrer Länge verstärkt die streifenförmige Einlage 13 - wie Fig. 2 zeigt - über die gesamte Länge der Schale 10. Dadurch sind auch die Querseitenränder 16 dreilagig ausgebildet.

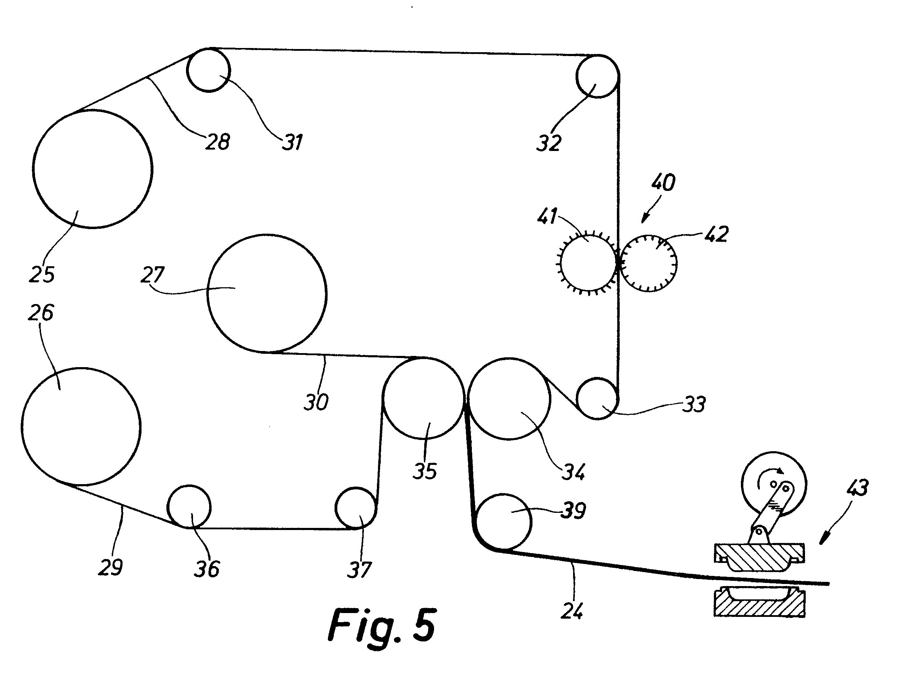

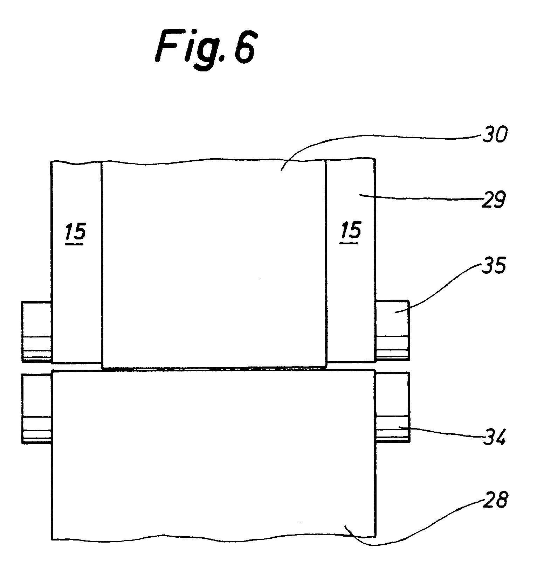

Fig. 5 zeigt schematisch eine Vorrichtung zur Herstellung der dreilagigen Schale 10 nach der Erfindung. Auf drei Bobinen 25, 26 und 27 sind zwei Bahnen 28 und 29 aus Kunststoff für die obere Lage 11 bzw. die untere Lage 12 sowie eine mittlere Bahn 30 aus saugfähigem Material für die saugfähige Einlage 13 aufgewickelt. Die obere Bahn 28 für die obere Lage 11 wird über Umlenkrollen 31 und 32 zu einer Stanzstation 40 geleitet, in der die Öffnungen 14 in die obere Lage 11 eingestanzt werden. In diesem Ausführungsbeispiel besteht die Stanzstation 40 aus einer mit entsprechenden Dornen versehenen Stanzwalze 41 und einer gegenüberliegenden Gegenwalze 42 zwischen denen die obere Bahn 28 zum Stanzen hindurchgeleitet wird. Anschließend erfolgt eine weitere Umlenkung der nunmehr mit Öffnungen 14 versehenen oberen Bahn 28 an einer Umlenkrolle 33. Von hier aus wird die obere Bahn 28 zu einem Paar Preßwalzen 34 und 35 geleitet, wo eine Vereinigung der oberen Bahn 28 mit der von einer Bobine 27 abgerollten mittleren Bahn 30 und der von einer Bobine 26 kommenden unteren Bahn 29, die vorher über zwei Umlenkrollen 36 und 37 umgelenkt wird, erfolgt. Aus der Fig. 6 ist zu erkennen, daß die schmalere mittlere Bahn 30 mittig zwischen den breiteren oberen und unteren Bahnen 28 und 29 geführt wird, so daß beidseitig gegenüber der mittleren Bahn 30 Randbereiche stehenbleiben, die keine Zwischenlage aufweisen und zur späteren Bildung der Seitenränder 15 dienen.

Im Walzenspalt der Preßwalzen 34 und 35 wird durch eine nicht gezeigte Einrichtung Klebstoff auf die Bahnen 28 und 29 aufgebracht, und zwar vorzugsweise nur in Randbereichen, die von der mittleren Bahn 30 nicht bedeckt sind. Dadurch erfolgt eine Verklebung der so gebildeten (Drei-)Schichtenbahn 24 nur dort, wo die obere Bahn 28 und die untere Bahn 29 für die obere Lage 11 und die untere Lage 12 unmittelbar zusammenliegen.

Statt eine Verklebung mit einem Kleber können die Bahnen 28 und 29 auch miteinander heiß versiegelt werden, unter gleichzeitiger Aufbringung von Druck mittels der dann beheizten Preßwalzen 34 und 35. Die Beheizung der Preßwalzen 34 und 35 kann ggf. derart erfolgen, daß an den Stellen, an denen die obere Bahn 28 und die untere Bahn 29 unmittelbar aufeinanderliegen eine besonders intensive Wärmeeinwirkung erfolgt. Auch im Falle der Verwendung von Klebstoff können die Preßwalzen 34 und 35 beheizt sein, um ein schnelleres Aushärten des Klebers zu bewirken. Eine thermische Aktivierung der zu verklebenden Bereiche der Bahnen 28, 29 kann alternativ auch durch Wärmestrahler erfolgen.

Die nach der Verbindung der Bahnen 28,29 und 30 zwischen den Preßwalzen 34 und 35 entstehende Schichtenbahn 24 für die Schale 10 wird an einer weiteren Umlenkrolle 39 umgelenkt. Von hier aus wird die Schichtenbahn 24 schließlich einer in der Fig. 5 schematisch angedeuteten Tiefziehstation 43 zugeführt, in der die Schale 10 aus der Schichtenbahn 24 geformt wird. Gleichzeitig erfolgt in der Tiefziehstation 43 ein Besäumen der fertigen Schale 10, wodurch die fertigen Schalen 10 von der Schichtenbahn 24 abgetrennt werden, indem in die Tiefziehstation 43 ein Besäumwerkzeug aus einem an der Matrize vorstehenden Kragen und einer entsprechenden Ausnehmung in der Patrize integriert ist. Es ist auch möglich, die Tiefziehstation 43 zum Verbinden der Bahnen 28 und 29 zu beheizen, so daß erst in der Tiefziehstation 43 ein Verschweißen oder dgl. der Schichtenbahn 24 stattfindet, anstatt zwischen den Preßwalzen 34, 35, die dann entfallen können.

Schließlich ist es auch denkbar, die obere Bahn 28 und die untere Bahn 29 der in der Fig. 5 gezeigten Vorrichtung zuzuführen, indem sie direkt von zwei Extrudern kommend unter entsprechender Umlenkung weiterbehandelt werden. Zur Herstellung der Bahnen 28, 29 kann auch ein Extruder ausreichen, wenn nämlich dieser eine doppelt breite Bahn herstellt, die zur Bildung der zwei Bahnen 28 und 29 getrennt und entsprechend umgelenkt wird. Die Bobinen 25 und 26 sind in einem solchen Fall nicht mehr erforderlich.

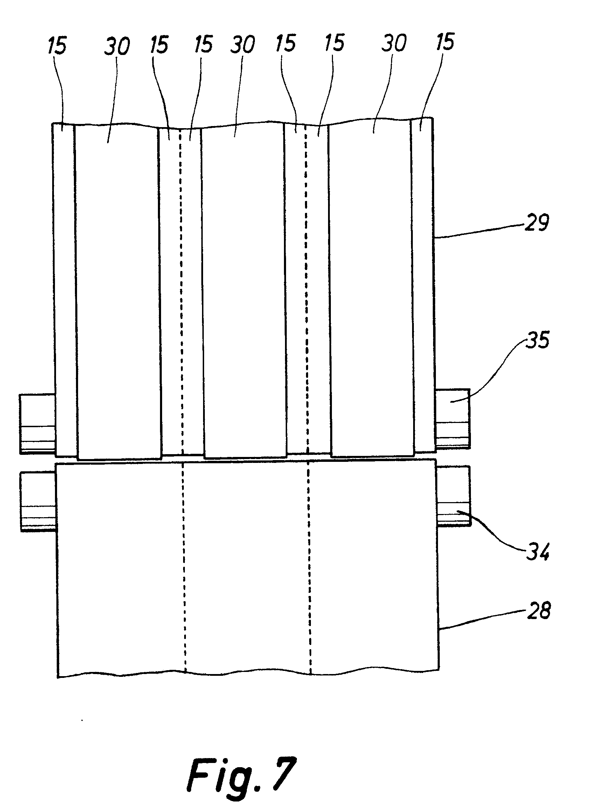

In Fig. 7 ist dargestellt, wie auf einer breiteren Bahn mehrere Einzelbahnen für die Schalen 10 hergestellt werden können. Hier sind drei mittlere Bahnen 30 auf durchgehenden Bahnen 28 bzw. 29 aufgebracht, und zwar jeweils im Abstand zueinander. Durch diese Abstände werden wieder die seitlichen Bereiche 16 gebildet, in denen die Bahn 29 dann mit der Bahn 28 verbunden wird. Zur Weiterverarbeitung können dann die Bahnen längs getrennt werden (gestrichelte Linien in Fig. 7) oder mehreren (hier drei) parallelen Tiefziehstationen 43 zugeführt werden.

## Patentansprüche

1. Schale zur Aufnahme von Flüssigkeit absondernden Nahrungs- und Genußmitteln, beispielsweise Fleisch, Fisch oder Geflügel, mit einem Schalengrundkörper, aus zwei eine Bodenwand (44), Seitenränder (15) und Querseitenränder (16) bildende Lagen (11, 12) aus flüssigkeitsdichtem Schaumkunststoff, mit einer zwischen den Lagen (11, 12) angeordneten saugfähigen Einlage (13), die eine geringere Breite als die Lagen (11, 12) aufweist, wobei neben der Einlage (13) liegende seitliche Bereiche der Lagen (11, 12) unmittelbar miteinander verbunden sind, und mit Öffnungen (14) in der oberen zum Nahrungs- bzw. Genußmittel weisenden Lage (11), **dadurch gekennzeichnet,** daß die Einlage (13) und die Lagen (11, 12) aus gleich langen Abschnitten entsprechender Bahnen (28, 29, 30) gebildet sind, und daß die Öffnungen (14) sowohl in der Bodenwand (44) als auch in den beiden Querseitenrändern (16) angeordnet sind.

2. Schale nach Anspruch 1, dadurch gekennzeichnet, daß die als durchgehende Löcher ausgebildeten Öffnungen (14) der oberen Lage (11) in vorzugsweise zwei parallelen Längsreihen gruppiert sind.

3. Schale nach Anspruch 1 oder 2, dadurch gekennzeichnet, daß die die Öffnungen (14) umgebenden Bereiche in der oberen Lage (11) trichterförmig ausgebildet sind.

4. Verfahren zur Herstellung von Schalen zur Aufnahme von Flüssigkeit absondernden Nahrungs- und Genußmitteln, beispielsweise Fleisch, Fisch oder Geflügel, mit einem Schalengrundkörper aus zwei äußeren Lagen (11, 12), von denen die zum Nahrungs- bzw. Genußmittel weisende Lage (11) Öffnungen (14) aufweist, und einer zwischen den Lagen (11, 12) angeordneten saugfähigen Einlage (13), insbesondere zur Herstellung von Schalen nach einem oder mehreren der Ansprüche 1 bis 3, wobei zur Bildung der äußeren Lagen (11, 12) des Schalengrundkörpers dienende äußere Bahnen (28, 29) und eine innere Bahn zur Bildung der Einlage (13) zusammengeführt und danach eine plastische Verformung vorgenommen wird, dadurch gekennzeichnet, daß die eine obere Lage (11) der Schale bildende Bahn (28) während ihres Transports mit den Öffnungen (14) versehen wird, nach dem anschließenden Zusammenführen der Bahnen (28, 29, 30) außerhalb der schmaleren, inneren Bahn (30) zusammenliegende Bereiche der äußeren Bahnen (28, 29) miteinander zu einer Mehrschichtbahn (24) verbunden werden unter Einbettung der inneren Bahn (30) zwischen den beiden äußeren Bahnen (28, 29), und danach die Verformung der Mehrschichtbahn (24) erfolgt.

5. Verfahren nach Anspruch 4, dadurch gekennzeichnet, daß durch Wärmezufuhr beim Stanzen der Öffnungen (14) die diese umgebenden Bereiche trichterförmig ausgebildet werden.

6. Verfahren nach Anspruch 4 oder 5, dadurch gekennzeichnet, daß aus einer breiteren Bahn mehrere nebeneinanderliegende äußere Bahnen (28, 29) gleichzeitig gebildet und zwischen die breiteren Bahnen mehrere mit Abstand zueinander angeordnete innere Bahnen (30) gebracht werden.

7. Vorrichtung zur Herstellung von Schalen nach einem oder mehreren der Ansprüche 1 bis 3 sowie zur Durchführung des Verfahrens nach den Ansprüchen 4 bis 6, mit einer Einrichtung zum Abziehen bzw. Extrudieren von Bahnen, einer Stanzstation, einer Verbindungsstation und einer Tiefziehstation, gekennzeichnet durch eine einer oberen Bahn (28) zugeordneten Stanzstation (40), die in bezug auf die Bewegungsrichtung der oberen Bahn (28) vor der Verbindungsstation (Preßwalzen 34, 35) zum Verbinden der äußeren Bahnen (28, 29) angeordnet ist und eine umlaufende Stanzwalze (41) mit vorstehenden Stanzstiften sowie ein Gegenwerkzeug aufweist.

8. Vorrichtung nach Anspruch 7, dadurch gekennzeichnet, daß das Gegenwerkzeug als eine mit Löchern versehene Gegenwalze (42) ausgebildet ist.

9. Vorrichtung nach Anspruch 7, dadurch gekennzeichnet, daß die Verbindungsstation beheizte Preßwalzen (34, 35) aufweist.

## Claims

1. Tray for receiving liquid-secreting foodstuffs and delicacies, for example meat, fish or poultry, with a basic tray body consisting of two layers (11, 12) of liquid-tight plastic foam forming a bottom wall (44), side edges (15) and transverse side edges (16), with an absorbent insert (13) arranged between the layers (11, 12) and having a smaller width than the layers (11, 12), lateral regions of the layers (11, 12) located next to the insert (13) being connected directly to one another, and with orifices (14) in the upper layer (11) pointing towards the foodstuff or delicacy, characterised in that the insert (13) and the layers (11, 12) are formed from equally long portions of corresponding sheets (28, 29, 30), and in that the orifices (14) are arranged both in the bottom wall (44) and in the two transverse side edges (16).

2. Tray according to Claim 1, characterised in that the orifices (14) of the upper layer (11) which are designed as continuous holes are grouped in preferably two parallel longitudinal rows.

3. Tray according to Claim 1 or 2, characterised in that the regions in the upper layer (11) which surround the orifices (14) are of funnel-shaped design.

4. Process for producing trays for receiving liquid-secreting foodstuffs and delicacies, for example meat, fish or poultry, with a basic tray body consisting of two outer layers (11, 12), of which the layer (11) pointing towards the foodstuff or delicacy has orifices (14), and with an absorbent insert (13) arranged between the layers (11, 12), especially for producing trays according to one or more of Claims 1 to 3, in which outer sheets (28, 29) serving for forming the outer layers (11, 12) of the basic tray body and an inner sheet for forming the insert (13) are brought together and thereafter a plastic deformation is carried out, characterised in that the sheet (28) forming an upper layer (11) of the tray is provided with the orifices (14) during its transport, after the sheets (28, 29, 30) have subsequently been brought together regions of the outer sheets (28, 29) lying together outside the narrower inner sheet (30) are connected to one another to form a multi-layered sheet (24), with the inner sheet (30) being embedded between the two outer sheets (28, 29), and thereafter the deformation of the multi-layered sheet (24) is carried out.

5. Process according to Claim 4, characterised in that, during the stamping of the orifices (14), the regions surrounding these are made funnel-shaped by the supply of heat.

6. Process according to Claim 4 or 5, characterised in that a plurality of outer sheets (28, 29) lying next to one another is formed simultaneously from a wider sheet, and a plurality of inner sheets (30) arranged at a distance from one another is brought between the wider sheets.

7. Apparatus for producing trays according to one or more of Claims 1 to 3 and for carrying out the process according to Claims 4 to 6, with a device for drawing off or extruding sheets, a stamping station, a connection station and a deep-drawing station, characterised by a stamping station (40) which is assigned to an upper sheet (28) and is arranged in front of the connection station (press rollers 34, 35) for connecting the outer sheets (28, 29) in relation to the direction of movement of the upper sheet (28) and which has a rotating stamping roller (41) with projecting stamping spikes and a counter-tool.

8. Apparatus according to Claim 7, characterised in that the counter-tool is designed as a counter-roller (42) equipped with holes.

9. Apparatus according to Claim 7, characterised in that the connection station has heated press rollers (34, 35).

## Revendications

1. Barquette pour la réception de produits alimentaires et de consommation éliminant du liquide, par exemple de la viande, du poisson ou de la volaille, comprenant un élément de base de barquettes constitué par deux couches (11, 12) qui forment une paroi de fond (44), des bords latéraux (15) et des bords latéraux transversaux (16) et qui sont réalisées en une matière synthétique moussée étanche aux liquides, comprenant une couche intercalaire absorbante (13) qui est agencée entre les couches (11, 12) et qui présente une largeur inférieure à celle des couches (11, 12), des zones latérales des couches (11, 12) situées à proximité de la couche intercalaire (13) étant jointes directement l'une à l'autre, et comprenant des ouvertures (14) dans la couche supérieure (11) pointant vers le produit d'alimentation ou respectivement de consommation, caractérisée en ce que la couche intercalaire (13) et les couches (11, 12) sont formées à partir de sections de mêmes longueurs de rubans correspondants (28, 29, 30) et en ce que les ouvertures (14) sont agencées tant dans la paroi de fond (44) qu'aussi dans les deux bords latéraux transversaux (16).

2. Barquette suivant la revendication 1, caractérisée en ce que les ouvertures (14) de la couche supérieure (11) réalisées sous la forme de trous passants sont groupées de préférence en deux rangées longitudinales parallèles.

3. Barquette suivant l'une ou l'autre des revendications 1 et 2, caractérisée en ce que les zones entourant les ouvertures (14), dans la couche supérieure (11), sont réalisées en forme d'entonnoir.

4. Procédé de fabrication de barquettes pour la réception de produits alimentaires et de consommation éliminant du liquide, par exemple de la viande, du poisson ou de la volaille, comprenant un élément de base de barquette consistant en deux couches externes (11, 12) dont la couche (11) pointant vers le produit alimentaire ou de consommation présente des ouvertures (14) et comprenant une couche intercalaire absorbante (13) agencée entre les couches (11, 12), en particulier pour la fabrication de barquettes suivant l'une ou plusieurs des revendications 1 à 3, des rubans externes (28, 29) servant à la formation des couches externes (11, 12) de l'élément de base de barquettes et un ruban interne pour la formation de la couche intercalaire (13) étant réunis et un formage plastique étant ensuite entrepris, caractérisé en ce que le ruban (28) formant une couche supérieure (11) de la barquette est pourvu des ouvertures (14) pendant son transport, en ce que des zones posées l'une sur l'autre des rubans externes (28, 29) sont jointes l'une à l'autre en un ruban à plusieurs couches (24) après la réunion suivante des rubans (28, 29, 30), en dehors du ruban interne plutôt étroit (30), en incorporant le ruban interne (30) entre les deux rubans externes (28, 29), et en ce qu'est réalisé ensuite le formage du ruban à plusieurs couches (24).

5. Procédé suivant la revendication 4, caractérisé en ce que par un apport de chaleur lors de l'emboutissage des ouvertures (14), les zones entourant ces dernières sont réalisées en forme d'entonnoir.

6. Procédé suivant l'une ou l'autre des revendications 4 et 5, caractérisé en ce que sont simultanément formés à partir d'un ruban assez large plusieurs rubans externes (28, 29) situés l'un à côté de l'autre et en ce que sont amenés entre les rubans assez larges plusieurs rubans internes (30) agencés à distance l'un de l'autre.

7. Dispositif de fabrication de barquettes suivant une ou plusieurs des revendications 1 à 3, et pour la réalisation du procédé suivant l'une quelconque des revendications 4 à 6, comprenant un dispositif pour tirer ou selon le cas pour extruder des rubans, un poste de découpage, un poste de jonction et un poste d'emboutissage, caractérisé par un poste de découpage (40) qui est adjoint à un ruban supérieur (28), qui est agencé avant le poste de jonction (rouleaux de pressage 34, 35), quant au sens de déplacement du ruban supérieur (28), pour la jonction des rubans externes (28, 29) et qui présente un rouleau tournant de découpage (41), comportant des broches de découpage faisant saillie, et un outil antagoniste.

8. Dispositif suivant la revendication 7, caractérisé en ce que l'outil antagoniste est réalisé sous la forme d'un rouleau antagoniste (42) pourvu de trous.

9. Dispositif suivant la revendication 7, caractérisé en ce que le poste de jonction présente des rouleaux de pressage (34, 35) chauffés.

Fig. 1

*Fig. 2*

*Fig. 3*

*Fig. 4*

Fig. 5

EP 0 182 139 B1

# Fig. 6

15

15

30

29

35

34

28

**Fig.7**